# EUROPEAN PATENT APPLICATION

(11) **EP 4 187 175 A1**
(43) Date of publication of application: **31.05.2023**
(21) Application number: 21846509.4
(22) Date of filing: 08.07.2021
(51) Int. Cl.: F25B 5/02, F25B 1/00

(54) **CHILLER**

(30) Priority: 21.07.2020 JP 2020124650
(71) Applicant: SMC Corporation, Tokyo 101-0021 (JP)
(72) Inventor: FUJII, Kunihide, Ibaraki 3002493 (JP); TOBE, Yohei, Ibaraki 3002493 (JP); SASATANI, Toshiki, Ibaraki 3002493 (JP)
(74) Representative: Keil & Schaafhausen Patentanwälte PartGmbB
(86) International application number: PCT/JP2021/025708
(87) International publication number: WO 2022/019127

(57) **Abstract**

[Object] To provide a chiller that includes a DI filter configured to remove ionic substances in cooling waters, and that is of such a small size as to save energy and costs.

[Solution] A chiller 1 includes cooling-water circuits 3 and 4 through which cooling waters 7 and 8 are respectively supplied to two devices 5 and 6, and a refrigeration circuit 2 through which primary refrigerant that controls the temperatures of the cooling waters flows. The refrigeration circuit 2 includes heat-exchange-path sections 23 and 24 that are connected in parallel and are provided in a number equal to the number of the cooling-water circuits. The heat-exchange-path sections include respective heat exchangers 21 and 22. The cooling-water circuits 3 and 4 include tanks 40 and 60 in which the cooling waters are stored, first supply lines 43 and 63 through which the cooling waters in the tanks are supplied to the respective heat exchangers, second supply lines 44 and 64 through which the cooling waters having temperatures controlled in the heat exchangers are supplied to the devices, and return lines 45 and 65 through which the cooling waters returning from the devices are guided to the tanks. The chiller 1 includes a filtering line 76 branching off from the second supply line 44 of the cooling-water circuit 3 and connected to the return line 65 of the cooling-water circuit 4. The filtering line 76 is provided with a DI filter 78.

## Description

### Technical Field

The present invention relates to a chiller for controlling the temperatures of heat loads by supplying the heat loads with temperature-controlled cooling waters.

### Background Art

A chiller is disclosed by Patent Literature (PTL) 1 that is configured to control the temperatures of a plurality of heat loads by supplying the plurality of heat loads with temperature-controlled cooling waters for heat exchange. The chiller disclosed by PTL 1 includes a plurality of cooling-liquid circuits through which respective cooling waters are supplied to a plurality of devices, a single refrigeration circuit with which the temperatures of the cooling waters are controlled, and a control device that controls the chiller as a whole. The refrigeration circuit includes two heat exchangers that are connected in parallel. The heat exchangers are respectively connected to the plurality of cooling-liquid circuits. Therefore, the cooling waters having cooled the devices are subjected to temperature control in the heat exchangers of the refrigeration circuit and are then supplied to the devices again.

In any of the cooling-liquid circuits disclosed by PTL 1, a supply line through which the cooling water having undergone heat exchange in the heat exchanger of the cooling-liquid circuit is supplied to the device has a branch serving as a filtering line. The filtering line is connected to a return line through which the cooling water having supplied to the device is returned to a tank. The filtering line is provided with a deionization filter (DI filter) that removes ionic substances in the cooling water. The DI filter removes ionic substances in the cooling water and thus generates pure water of increased purity. Since the DI filter is provided to the cooling-liquid circuit, corrosion of metal materials is suppressed. Furthermore, the electrically insulating characteristic of the cooling water is increased, which suppresses the short-circuiting between the device and metal pipes or the like. Thus, the stability in the operations of the device and the chiller is increased.

### Citation List

### Patent Literature

PTL 1: WO2020/100206

### Summary of Invention

### Technical Problem

In the chiller disclosed by PTL 1, only one of the two cooling-liquid circuits is provided with the filtering line and the DI filter. Therefore, if pure water of increased purity is required for the other cooling-liquid circuit as well, the other cooling-liquid circuit may also be provided with a filtering line, a DI filter, and an electromagnetic valve or the like that opens and closes the filtering line. However, such addition of a filtering line, a DI filter, and an electromagnetic valve inevitably increases the size of the chiller as a whole and also increases costs and energy consumption. On the other hand, in view of saving the space, energy, and costs, users desire chillers of smaller sizes that are configured to suppress the increase in energy and costs.

A technical object of the present invention is to provide a chiller that includes a DI filter capable of removing ionic substances contained in cooling waters to be used for controlling the respective temperatures of a plurality of heat loads, and that is of such a small size as to suppress the increase in energy and costs.

### Solution to Problem

To solve the problem, a chiller according to the present invention is configured to control temperatures of a plurality of heat loads by using circulating cooling waters. The chiller includes a plurality of cooling-water circuits through which the cooling waters are respectively supplied to the plurality of heat loads, and a refrigeration circuit through which primary refrigerant that controls the temperatures of the cooling waters flows. The refrigeration circuit includes heat-exchange-path sections that are connected in parallel with one another and are provided with respective heat exchangers, a number of the heat-exchange-path sections being equal to a number of the cooling-water circuits. The plurality of cooling-water circuits are each connected to the heat exchanger of a corresponding one of the plurality of heat-exchange-path sections. The plurality of cooling-water circuits each include a tank in which the cooling water is stored, a first supply line through which the cooling water in the tank is supplied to the heat exchanger of the corresponding one of the plurality of heat-exchange-path sections, a pump provided to the first supply line, a second supply line through which the cooling water having a temperature controlled in the heat exchanger is delivered to the heat load, and a return line through which the cooling water returning from the heat load is guided to the tank. The chiller further includes a filtering line branching off from the second supply line of any one of the plurality of cooling-water circuits and connected to the return lines of others of the cooling-water circuits. The filtering line is provided with a DI filter for purifying the cooling waters.

In such a case, it is preferable that a communicating line for maintaining an amount of each of the cooling waters in the tanks to be constant be connected between the tanks of the plurality of cooling-water circuits. Furthermore, it is preferable that a flow rate of the cooling water flowing from the filtering line into the tank through the return line be equal to a flow rate of the cooling water discharged from the tank and flowing through the communicating line into the tank included in the cooling-water circuit having the second supply line to which the filtering line is connected.

It is more preferable that the chiller further include a control device configured to control the chiller as a whole, that the filtering line be provided with an electromagnetic valve configured to allow or stop flow of the cooling water from the second supply line into the filtering line, that the return line be provided with a conductivity sensor configured to measure electrical conductivity of the cooling water flowing in the return line, and that the control device control the electromagnetic valve to open or close with reference to the electrical conductivity measured by the conductivity sensor.

### Advantageous Effects of Invention

The chiller according to the present invention is provided as a chiller that includes a DI filter capable of removing ionic substances contained in cooling waters to be used for controlling the respective temperatures of a plurality of heat loads, and that is of such a small size as to suppress the increase in energy and costs.

### Brief Description of Drawings

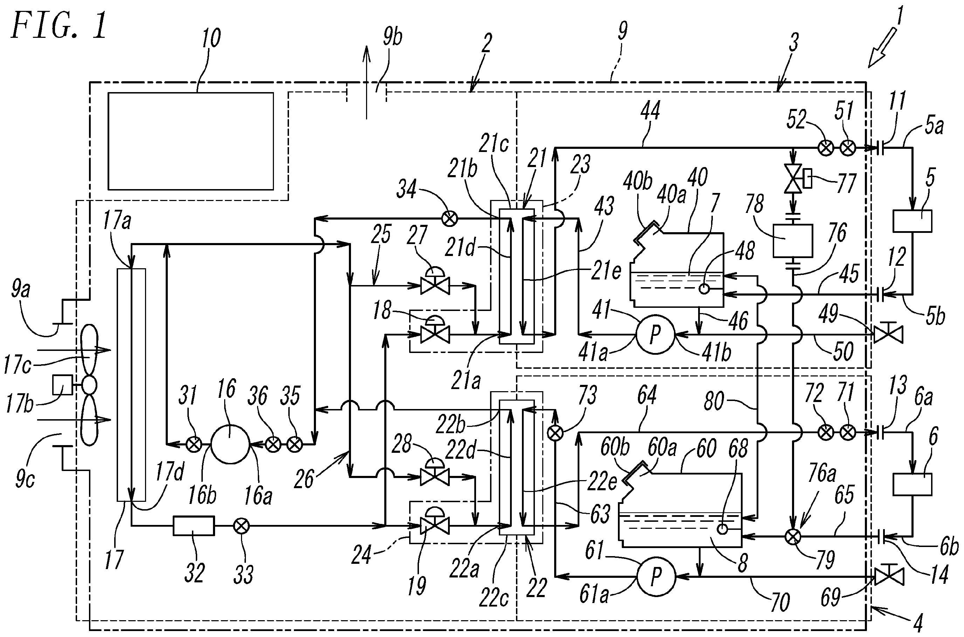

[Fig. 1] Fig. 1 is a circuit diagram of a chiller according to an embodiment of the present invention.

### Description of Embodiments

A chiller according to an embodiment of the present invention will now be described. The present embodiment relates to an exemplary case where the cooling waters are each clear water, and heat loads are a laser oscillator and a probe configured to emit laser light that are included in a laser welding device. The laser oscillator is a load that is to have a low temperature. The probe is a load that is to have a higher temperature than the laser oscillator.

A chiller 1, illustrated in Fig. 1, is configured to control the temperatures of two devices: a first device 5 (a heat load) and a second device 6 (a heat load). The chiller 1 includes two circuits: a first cooling-water circuit 3 (a cooling-water circuit) and a second cooling-water circuit 4 (a cooling-water circuit), one refrigeration circuit 2, and a control device 10. The control device 10 controls the chiller 1 as a whole. The first cooling-water circuit 3 supplies first cooling water 7 to the first device 5. The second cooling-water circuit 4 supplies second cooling water 8 to the second device 6. Thus, the first device 5 and the second device 6 are cooled separately.

The refrigeration circuit 2 contains primary refrigerant for controlling the temperatures of the first cooling water 7 in the first cooling-water circuit 3 and the second cooling water 8 in the second cooling-water circuit 4. The primary refrigerant is caused to exchange heat with each of the first cooling water 7 and the second cooling water 8. Thus, the temperatures of the first cooling water 7 and the second cooling water 8 are controlled to be preset temperatures. The primary refrigerant to be used may be, for example, hydrofluorocarbon (HFC) or natural refrigerant (ammonia, carbon dioxide, or the like).

In the present embodiment, the first device 5 is a laser oscillator included in a laser welding device and is a device that is to have a low temperature, while the second device 6 is a probe configured to emit laser light and is a device that is to have a high temperature. The first device 5 is cooled with the first cooling water 7 by the first cooling-water circuit 3. The second device 6 is cooled with the second cooling water 8 by the second cooling-water circuit 4.

In such a case, for example, the first cooling water 7 to be supplied to the first device 5 is clear water. The temperature of the clear water is set to an optimum temperature within a range of 10 to 30°C, preferably within a range of 15 to 25°C. The flow rate of the clear water is set to an optimum flow rate within a range of 20 to 80 L/min.

The second cooling water 8 to be supplied to the second device 6 is pure water. The temperature of the pure water is set to an optimum temperature within a range of 10 to 50°C, preferably within a range of 20 to 40°C. The flow rate of the pure water is set to an optimum flow rate within a range of 2 to 10 L/min. Note that the preset temperature of the second cooling water 8 needs to be equal to the preset temperature of the first cooling water 7 or higher than the preset temperature of the first cooling water 7.

The refrigeration circuit 2 and the two circuits: the first cooling-water circuit 3 and the second cooling-water circuit 4, are housed in one housing 9. The two devices: the first device 5 and the second device 6, are located outside the housing 9. The housing 9 is provided at an outer lateral surface thereof with two device connection ports 11 and 12 and two device connection ports 13 and 14. The first device 5 is connected to the first cooling-water circuit 3 at the device connection ports 11 and 12. The second device 6 is connected to the second cooling-water circuit 4 at the device connection ports 13 and 14.

### (Refrigeration Circuit)

The refrigeration circuit 2 includes a compressor 16, a condenser 17, a first main expansion valve 18, a second main expansion valve 19, a first heat exchanger 21, and a second heat exchanger 22, which are connected in series with one another with pipes, forming a loop. The compressor 16 compresses the primary refrigerant into a high-temperature, high-pressure gas. The condenser 17 cools the high-temperature, high-pressure, gas-state primary refrigerant discharged from the compressor 16 into a low-temperature, high-pressure liquid. The first main expansion valve 18 and the second main expansion valve 19 each expand the low-temperature, high-pressure primary refrigerant delivered from the condenser 17 into a low-temperature, low-pressure liquid. The first heat exchanger 21 and the second heat exchanger 22 each cause the low-temperature, low-pressure, liquid-state primary refrigerant delivered from a corresponding one of the first main expansion valve 18 and the second main expansion valve 19 to exchange heat with a corresponding one of the first cooling water 7 and the second cooling water 8 in the two circuits: the first cooling-water circuit 3 and the second cooling-water circuit 4, thereby turning the primary refrigerant into a low-pressure gas.

The first main expansion valve 18 and the first heat exchanger 21 are connected in series with each other to form a first heat-exchange-path section 23. The second main expansion valve 19 and the second heat exchanger 22 are connected in series with each other to form a second heat-exchange-path section 24. The first heat-exchange-path section 23 and the second heat-exchange-path section 24 are connected in parallel with each other as follows: a flow path extending from the exit of the condenser 17 branches into paths, which reach respective inlets 21a and 22a of the first heat exchanger 21 and the second heat exchanger 22 and merge with each other at a point between respective exits 21b and 22b of the first heat exchanger 21 and the second heat exchanger 22 and an inlet 16a of the compressor 16.

The first heat exchanger 21 has a case 21c, which houses a primary-refrigerant-flowing part 21d and a cooling-water-flowing part 21e. The primary refrigerant flows through the primary-refrigerant-flowing part 21d. The first cooling water 7 flows through the cooling-water-flowing part 21e. The primary refrigerant flowing in the primary-refrigerant-flowing part 21d and the first cooling water 7 flowing in the cooling-water-flowing part 21e are caused to exchange heat therebetween. Likewise, the second heat exchanger 22 has a case 22c, which houses a primary-refrigerant-flowing part 22d and a cooling-water-flowing part 22e. The primary refrigerant flows through the primary-refrigerant-flowing part 22d. The second cooling water 8 flows through the cooling-water-flowing part 22e. The primary refrigerant flowing in the primary-refrigerant-flowing part 22d and the second cooling water 8 flowing in the cooling-water-flowing part 22e are caused to exchange heat therebetween.

The flow rates of the primary refrigerant in the primary-refrigerant-flowing part 21d of the first heat exchanger 21 and in the primary-refrigerant-flowing part 22d of the second heat exchanger 22 increase or decrease when the opening degrees of the first main expansion valve 18 and the second main expansion valve 19 are increased or decreased. Thus, the cooling capacities of the first heat exchanger 21 and the second heat exchanger 22 are controlled. The first main expansion valve 18 and the second main expansion valve 19 each serve as an expansion valve for cooling and supply the low-temperature primary refrigerant to a corresponding one of the first heat exchanger 21 and the second heat exchanger 22.

The refrigeration circuit 2 includes a flow path connecting an outlet 16b of the compressor 16 and an entrance 17a of the condenser 17 to each other. The flow path branches into a first branch path 25 and a second branch path 26. The first branch path 25 is connected to a point between the first heat exchanger 21 and the first main expansion valve 18 in the first heat-exchange-path section 23. The second branch path 26 is connected to a point between the second heat exchanger 22 and the second main expansion valve 19 in the second heat-exchange-path section 24. The first branch path 25 is provided with a first sub expansion valve 27. The second branch path 26 is provided with a second sub expansion valve 28.

The first branch path 25 and the second branch path 26 each allow a portion of the high-temperature primary refrigerant discharged from the compressor 16 to be supplied as heating refrigerant to a corresponding one of the first heat-exchange-path section 23 and the second heat-exchange-path section 24. With the supply of the heating refrigerants, the temperatures of the cooling waters flowing through the first heat exchanger 21 and the second heat exchanger 22 are controlled.

The flow rates of the heating refrigerants increase or decrease when the opening degrees of the first sub expansion valve 27 and the second sub expansion valve 28 are increased or decreased. Thus, the temperatures of the cooling waters that flow into the first heat exchanger 21 and the second heat exchanger 22 are controlled. Therefore, the first sub expansion valve 27 and the second sub expansion valve 28 each serve as a heating expansion valve.

In the present embodiment, the first main expansion valve 18, the second main expansion valve 19, the first sub expansion valve 27, and the second sub expansion valve 28 are each an electronic expansion valve whose opening degree is arbitrarily controllable by using a stepping motor. The first main expansion valve 18, the second main expansion valve 19, the first sub expansion valve 27, and the second sub expansion valve 28 are electrically connected to the control device 10, so that the opening degrees thereof are controllable by the control device 10.

The condenser 17 is an air-cooling condenser that cools the primary refrigerant by using a fan 17c, which is driven by an electric motor 17b. The fan 17c is located in a fan-housing part 9a, which is provided at a lateral face of the housing 9. The fan-housing part 9a has an air inlet 9c, through which outdoor air is taken in as cooling air toward the condenser 17. The cooling air taken in through the air inlet 9c cools the primary refrigerant when passing through the condenser 17 and is then discharged to the outside of the housing 9 through an air outlet 9b, which is open at the top of the housing 9. The condenser 17 is not limited to the one that is of an air-cooling type and may be of a water-cooling type.

The housing 9 houses the control device 10 that controls the operation of the chiller 1 as a whole. The compressor 16 and the fan 17c are electrically connected to the control device 10 and are subjected to inverter control performed by the control device 10. Thus, the numbers of revolutions, the outputs, and so forth of the compressor 16 and the fan 17c are controlled.

In the refrigeration circuit 2, the flow path extending from the outlet 16b of the compressor 16 to the entrance 17a of the condenser 17 is provided with a first temperature sensor 31, which measures the temperature of the primary refrigerant discharged from the compressor 16. Furthermore, the flow path extending from the exit 17d of the condenser 17 to the first heat-exchange-path section 23 and the second heat-exchange-path section 24 is provided with a filter 32 and a first pressure sensor 33 in that order. The filter 32 filters out impurities contained in the primary refrigerant. The first pressure sensor 33 measures the pressure of the primary refrigerant. Furthermore, a flow path extending from the first heat-exchange-path section 23 to the inlet 16a of the compressor 16 is provided with a second temperature sensor 34, which measures the temperature of the primary refrigerant discharged from the first heat exchanger 21. The flow path is further provided with a second pressure sensor 35 and a third temperature sensor 36 on the downstream side relative to the second temperature sensor 34. The second pressure sensor 35 measures the pressure of the primary refrigerant to be taken into the compressor 16. The third temperature sensor 36 measures the temperature of the primary refrigerant. The first temperature sensor 31, the second temperature sensor 34, the third temperature sensor 36, the first pressure sensor 33, and the second pressure sensor 35 are electrically connected to the control device 10. On the basis of the results of measurements by the foregoing sensors, the control device 10 controls the numbers of revolutions, the outputs, and so forth of the compressor 16 and the electric motor 17b of the condenser 17.

Apart of the refrigeration circuit 2 that extends from the outlet 16b of the compressor 16, passes through the condenser 17, and reaches the first main expansion valve 18 and the second main expansion valve 19 is a high-pressure part in which the pressure of the primary refrigerant is high, whereas a part of the refrigeration circuit 2 that extends from the exits of the first main expansion valve 18 and the second main expansion valve 19, passes through the first heat exchanger 21 and the second heat exchanger 22, and reaches the inlet 16a of the compressor 16 is a low-pressure part in which the pressure of the primary refrigerant is low.

### (First Cooling-Water Circuit)

The first cooling-water circuit 3 includes a first tank 40, a first pump 41, a first supply line 43, a second supply line 44, a return line 45, and a return communicating line 46. The first tank 40 contains the first cooling water 7. The first pump 41 is provided outside the first tank 40. The first supply line 43 connects an outlet 41a of the first pump 41 and the entrance of the cooling-water-flowing part 21e of the first heat exchanger 21 to each other. The second supply line 44 connects the exit of the cooling-water-flowing part 21e and the device connection port 11, which is on the supply side, to each other. The return line 45 connects the device connection port 12, which is on the return side, and the first tank 40 to each other. The return communicating line 46 guides the first cooling water 7 from the first tank 40 to an inlet 41b of the first pump 41. The supply-side device connection port 11 and the return-side device connection port 12 respectively receive a supply-side device pipe 5a and a return-side device pipe 5b of the first device 5.

Thus, in the first cooling-water circuit 3, the first cooling water 7 in the first tank 40 is delivered by the first pump 41 to the cooling-water-flowing part 21e of the first heat exchanger 21. In the cooling-water-flowing part 21e, the first cooling water 7 is caused to exchange heat with the primary refrigerant flowing in the primary-refrigerant-flowing part 21d and is thus controlled to have the preset temperature. Then, the first cooling water 7 is immediately delivered to the first device 5 through the second supply line 44.

The first tank 40 is shaped as a hollow box. The first tank 40 has at the top thereof a feed port 40a, through which the first cooling water 7 is allowed to be fed into the first tank 40. The feed port 40a is provided with a detachable lid 40b. With the lid 40b attached to the feed port 40a, the space inside the first tank 40 is isolated from the outdoor air. The first tank 40 is provided thereinside with a level switch 48, which detects the level of the first cooling water 7. The first tank 40 is further provided with a drainpipe 50. The drainpipe 50 communicates with a drain port 49, which is provided at an outer surface of the housing 9.

The second supply line 44 is provided with a supply-side temperature sensor 51 and a supply-side pressure sensor 52. The supply-side temperature sensor 51 measures the temperature of the first cooling water 7 having undergone temperature control in the first heat exchanger 21 and flowing toward the first device 5. The supply-side pressure sensor 52 measures the pressure of the first cooling water 7. The supply-side temperature sensor 51 and the supply-side pressure sensor 52 are electrically connected to the control device 10. On the basis of the measured temperature and pressure of the first cooling water 7 and so forth, the control device 10 controls the first pump 41, the expansion valves 18, 19, 27, and 28 of the refrigeration circuit 2, and so forth.

### (Second Cooling-Water Circuit)

The second cooling-water circuit 4 includes a second tank 60, a second pump 61, a first supply line 63, a second supply line 64, and a return line 65. The second tank 60 contains the second cooling water 8. The second pump 61 is provided outside the second tank 60. The first supply line 63 connects an outlet 61a of the second pump 61 and the entrance of the cooling-water-flowing part 22e of the second heat exchanger 22 to each other. The second supply line 64 connects the exit of the cooling-water-flowing part 22e and the device connection port 13, which is on the supply side, to each other. The return line 65 connects the device connection port 14, which is on the return side, and the second tank 60 to each other. The supply-side device connection port 13 and the return-side device connection port 14 respectively receive a supply-side device pipe 6a and a return-side device pipe 6b of the second device 6.

Thus, in the second cooling-water circuit 4, the second cooling water 8 in the second tank 60 is delivered by the second pump 61 to the cooling-water-flowing part 22e of the second heat exchanger 22. In the cooling-water-flowing part 22e, the second cooling water 8 is caused to exchange heat with the primary refrigerant flowing in the primary-refrigerant-flowing part 22d and is thus controlled to have the preset temperature. Then, the second cooling water 8 is immediately delivered to the second device 6 through the second supply line 64.

As with the first tank 40, the second tank 60 is shaped as a hollow box. The second tank 60 has at the top thereof a feed port 60a, through which the second cooling water 8 is allowed to be fed into the second tank 60. The feed port 60a is provided with a detachable lid 60b. With the lid 60b attached to the feed port 60a, the space inside the second tank 60 is isolated from the outdoor air. The second tank 60 is provided with a level switch 68, which detects the level of the second cooling water 8 stored in the second tank 60. The second tank 60 is further provided with a drainpipe 70. The drainpipe 70 communicates with a drain port 69, which is provided at an outer surface of the housing 9.

The first supply line 63 is provided with a temperature sensor 73, which measure the temperature of the second cooling water 8 to be supplied from the second pump 61 to the second heat exchanger 22. The second supply line 64 is provided with a supply-side temperature sensor 71 and a supply-side pressure sensor 72. The supply-side temperature sensor 71 measures the temperature of the second cooling water 8 having undergone temperature control in the second heat exchanger 22 and flowing toward the second device 6. The supply-side pressure sensor 72 measures the pressure of the second cooling water 8. The supply-side temperature sensor 71, the temperature sensor 73, and the supply-side pressure sensor 72 are electrically connected to the control device 10. On the basis of the measured temperatures and pressure of the second cooling water 8 and so forth, the control device 10 controls the second pump 61, the expansion valves 18, 19, 27, and 28 of the refrigeration circuit 2, and so forth.

The first cooling-water circuit 3 and the second cooling-water circuit 4 are provided with a filtering line 76, which branches off from the second supply line 44 of the first cooling-water circuit 3 and is connected to the return line 65 of the second cooling-water circuit 4. In the present embodiment, the position where the filtering line 76 is connected to the second supply line 44 is on the upstream side relative to the supply-side pressure sensor 52 provided to the second supply line 44. The filtering line 76 is provided with an electromagnetic valve 77 and a DI filter 78 (a deionized filter). The electromagnetic valve 77 opens and closes the filtering line 76. The DI filter 78 purifies the first cooling water 7. In the present embodiment, the electromagnetic valve 77 is a two-way electromagnetic valve and is configured to be opened or closed to allow or stop the flow between the second supply line 44 and the return line 65.

The DI filter 78 includes an ion-exchanger-resin filter that allows the first cooling water 7 to pass therethrough. The ion-exchanger-resin filter has a function of adsorbing and removing ionic substances in the first cooling water 7 that flows therethrough. Hence, when the first cooling water 7, which is clear water, is made to flow through the DI filter 78, the clear water is purified. A merging part 76a, where the filtering line 76 is connected to the return line 65, is provided with a conductivity sensor 79. The conductivity sensor 79 measures the electrical conductivity of the purified first cooling water 7. The electromagnetic valve 77 and the conductivity sensor 79 are electrically connected to the control device 10. On the basis of the measured electrical conductivity, the control device 10 controls the electromagnetic valve 77.

As described above, the filtering line 76 is a line for removing ionic substances in the first cooling water 7 (clear water) and purifying the clear water. the filtering line 76 is usually closed with the electromagnetic valve 77 closed. However, when the amount of ionic substances in the second cooling water 8 increases to cause the conductivity sensor 79 to detect the increase in the electrical conductivity of the second cooling water 8, the electromagnetic valve 77 is opened. Accordingly, the filtering line 76 is connected to the DI filter 78 and allows the first cooling water 7 in the first supply line 43 to flow into the second tank 60 through the filtering line 76 and the return line 65. In this process, ionic substances in the first cooling water 7 are removed by the DI filter 78. Thus, the first cooling water 7 is purified.

While the DI filter 78 according to the illustrated embodiment is provided inside the housing 9, the DI filter 78 may alternatively be provided outside the housing 9. In the latter case, if the DI filter 78 is detachably attached to the filtering line 76, the DI filter 78 can be exchanged easily.

A communicating line 80 is connected between the first tank 40 and the second tank 60 respectively included in the first cooling-water circuit 3 and the second cooling-water circuit 4. The communicating line 80 maintains the level (amount) of each of the first cooling water 7 and the second cooling water 8 in the first tank 40 and the second tank 60 to be constant. In the present embodiment, one end of the communicating line 80 is connected to a position of the first tank 40 that is below the level of the first cooling water 7 to be stored therein, and the other end of the communicating line 80 is connected to a position of the second tank 60 that is below the level of the second cooling water 8 to be stored therein. Thus, the first tank 40 and the second tank 60 communicate with each other through the communicating line 80. When the purified first cooling water 7 flows into the second tank 60 through the filtering line 76, the liquid level in the second tank 60 rises, which causes the second cooling water 8 (pure water) in the second tank 60 to flow into the first tank 40 through the communicating line 80.

In this case, the first tank 40 and the second tank 60 are open to the outdoor air and are located at the same height. Therefore, when the first cooling water 7 flows into the second tank 60 through the filtering line 76 and raises the liquid level in the second tank 60, a portion of the second cooling water 8 that corresponds to the rise of the liquid level flows into the first tank 40 through the communicating line 80. That is, the cooling water returns into the first tank 40 by an amount that is equal to the amount of cooling water having flowed into the second tank 60. Thus, the liquid level (the amount of liquid) in each of the first tank 40 and the second tank 60 is maintained to be constant.

Furthermore, when the amount of the purified first cooling water 7 supplied to the second tank 60 increases, the electrical conductivity of the second cooling water 8 in the second tank 60 is reduced. Consequently, the electrical conductivity of the first cooling water 7 in the first tank 40 communicating with the second tank 60 is also reduced.

Now, the operation of controlling the temperatures of the first device 5 and the second device 6 by the chiller 1 will be described.

In the refrigeration circuit 2, the high-temperature, high-pressure primary refrigerant discharged from the compressor 16 is cooled by the condenser 17 to fall into a low-temperature, high-pressure state and then flows into each of the first heat-exchange-path section 23 and the second heat-exchange-path section 24. A portion of the primary refrigerant that has flowed into the first heat-exchange-path section 23 flows into the first main expansion valve 18, thereby falling into a low-temperature, low-pressure state. Then, in the first heat exchanger 21, the primary refrigerant cools the first cooling water 7 in the first cooling-water circuit 3 and thus gathers heat, thereby being evaporated and falling into a low-pressure state. On the other hand, a portion of the primary refrigerant that has flowed into the second heat-exchange-path section 24 flows into the second main expansion valve 19, thereby falling into a low-temperature, low-pressure state. Then, in the second heat exchanger 22, the primary refrigerant cools the second cooling water 8 in the second cooling-water circuit 4 and thus gathers heat, thereby being evaporated and falling into a low-pressure state. The portions of the primary refrigerant that are discharged from the first heat exchanger 21 and the second heat exchanger 22 merge together, and the merged primary refrigerant flows into the inlet 16a of the compressor 16.

In addition, a portion of the high-temperature, high-pressure primary refrigerant discharged from the compressor 16 flows into the first branch path 25 and the second branch path 26 and is supplied as heating refrigerant to the first heat-exchange-path section 23 and the second heat-exchange-path section 24. With the supply of the heating refrigerants, the temperatures of the first cooling water 7 and the second cooling water 8 flowing toward the first heat exchanger 21 and the second heat exchanger 22 are controlled. Consequently, the cooling capacities of the first heat exchanger 21 and the second heat exchanger 22 are controlled.

Meanwhile, in the first cooling-water circuit 3, the first cooling water 7 in the first tank 40 is delivered from the first pump 41 and flows through the first supply line 43 into the cooling-water-flowing part 21e of the first heat exchanger 21. In the first heat exchanger 21, the first cooling water 7 exchanges heat with the primary refrigerant in the refrigeration circuit 2 and is thus controlled to have the preset temperature. Then, the first cooling water 7 is delivered from the second supply line 44 and flows through the supply-side device connection port 11 into the first device 5. Thus, the first cooling water 7 cools the first device 5. The first cooling water 7 having gathered heat by cooling the first device 5 is discharged from the return-side device connection port 12, flows through the return line 45, and is returned into the first tank 40.

The temperature of the first cooling water 7 is constantly measured by the supply-side temperature sensor 51. On the basis of the measured temperature of the first cooling water 7, the opening degrees of the first main expansion valve 18 and the first sub expansion valve 27 in the refrigeration circuit 2 are controlled. Thus, the temperature of the first cooling water 7 is finely controlled and is maintained at the preset temperature.

For example, if the temperature of the first cooling water 7 measured by the supply-side temperature sensor 51 is higher than the preset temperature, the temperature of the first cooling water 7 needs to be lowered by increasing the cooling capacity of the first heat exchanger 21. Therefore, the opening degree of the first main expansion valve 18 in the refrigeration circuit 2 is increased to increase the flow rate of the low-temperature primary refrigerant that flows through the first heat-exchange-path section 23, whereas the opening degree of the first sub expansion valve 27 is reduced to reduce the flow rate of the high-temperature heating refrigerant that flows from the first branch path 25 into the first heat-exchange-path section 23. Consequently, the temperature of the primary refrigerant that flows into the first heat exchanger 21 is lowered, whereby the cooling capacity of the first heat exchanger 21 is increased. Thus, the first cooling water 7 is cooled, and the temperature thereof is lowered to the preset temperature.

Conversely, if the temperature of the first cooling water 7 is lower than the preset temperature, the first cooling water 7 needs to be heated in the first heat exchanger 21 to have a higher temperature. Therefore, the opening degree of the first main expansion valve 18 is reduced to reduce the flow rate of the low-temperature primary refrigerant that flows through the first heat-exchange-path section 23, whereas the opening degree of the first sub expansion valve 27 is increased to increase the flow rate of the high-temperature heating refrigerant that flows from the first branch path 25 into the first heat-exchange-path section 23. Consequently, the temperature of the primary refrigerant that flows into the first heat exchanger 21 is raised, whereby the first cooling water 7 is heated by the primary refrigerant having the raised temperature. Thus, the temperature of the first cooling water 7 is raised to the preset temperature.

In the second cooling-water circuit 4, the second cooling water 8 in the second tank 60 is delivered from the second pump 61 and flows through the first supply line 63 into the cooling-water-flowing part 22e of the second heat exchanger 22. In the second heat exchanger 22, the second cooling water 8 exchanges heat with the primary refrigerant in the refrigeration circuit 2 and is thus controlled to have the preset temperature. Then, the second cooling water 8 is delivered from the second supply line 64 and flows through the supply-side device connection port 13 into the second device 6. Thus, the second cooling water 8 cools the second device 6. The second cooling water 8 having gathered heat by cooling the second device 6 is discharged from the return-side device connection port 14, flows through the return line 65, and is returned into the second tank 60.

The temperature of the second cooling water 8 is constantly measured by the supply-side temperature sensor 71 and the temperature sensor 73. On the basis of the measured temperatures of the second cooling water 8, the opening degrees of the second main expansion valve 19 and the second sub expansion valve 28 in the refrigeration circuit 2 are controlled. Thus, the temperature of the second cooling water 8 is finely controlled to be the preset temperature.

For example, if the temperature of the second cooling water 8 measured by the supply-side temperature sensor 71 is higher than the preset temperature, the temperature of the second cooling water 8 needs to be lowered by increasing the cooling capacity of the second heat exchanger 22. Therefore, the opening degree of the second main expansion valve 19 in the refrigeration circuit 2 is increased to increase the flow rate of the low-temperature refrigerant that flows through the second heat-exchange-path section 24, whereas the opening degree of the second sub expansion valve 28 is reduced to reduce the flow rate of the high-temperature heating refrigerant that flows from the second branch path 26 into the second heat-exchange-path section 24. Consequently, the temperature of the primary refrigerant that flows into the second heat exchanger 22 is lowered, and the cooling capacity of the second heat exchanger 22 is increased. Thus, the second cooling water 8 is cooled, and the temperature thereof is lowered to the preset temperature.

Conversely, if the temperature of the second cooling water 8 is lower than the preset temperature, the second cooling water 8 needs to be heated in the second heat exchanger 22 to have a higher temperature. Therefore, the opening degree of the second main expansion valve 19 is reduced to reduce the flow rate of the low-temperature primary refrigerant that flows through the second heat-exchange-path section 24, whereas the opening degree of the second sub expansion valve 28 is increased to increase the flow rate of the high-temperature heating refrigerant that flows from the second branch path 26 into the second heat-exchange-path section 24. Consequently, the temperature of the primary refrigerant that flows into the second heat exchanger 22 is raised, whereby the second cooling water 8 is heated by the primary refrigerant having the raised temperature. Thus, the temperature of the second cooling water 8 is raised to the preset temperature.

On the other hand, if the amount of ionic substances in the second cooling water 8 increases, the electrical conductivity of the second cooling water 8 that is measured by the conductivity sensor 79 increases. Therefore, the electromagnetic valve 77 is opened to open the filtering line 76 and allows the first cooling water 7 to flow into the filtering line 76. Thus, the ionic substances in the first cooling water 7 are removed by the DI filter 78, whereby the first cooling water 7 is purified and is supplied as pure water to the second tank 60. Simultaneously, a portion of the second cooling water 8 stored and purified in the second tank 60 flows through the communicating line 80 into the first tank 40. Thus, the electrical conductivity of the second cooling water 8 that flows through the second cooling-water circuit 4 is reduced, and the electrical conductivity of the first cooling water 7 that flows through the first cooling-water circuit 3 is also reduced.

Furthermore, the amount of the first cooling water 7 (pure water) to be made to flow into the second tank 60 can be increased or reduced by opening or closing the electromagnetic valve 77 on the basis of the measurement of the second cooling water 8 by the conductivity sensor 79. Therefore, the second cooling water 8 and the first cooling water 7 are each controlled to have a predetermined low electrical conductivity. Such a configuration prevents the occurrence of, for example, short-circuiting that may disturb the operations of the first device 5 and the second device 6 while the temperatures of the first device 5 and the second device 6 are being controlled with the flows of the first cooling water 7 and the second cooling water 8.

To summarize, the filtering line 76 branches off from the second supply line 44 of the first cooling-water circuit 3 and is connected to the return line 65 of the second cooling-water circuit 4. Furthermore, the filtering line 76 is provided with the electromagnetic valve 77 for opening and closing the flow path, and the DI filter 78 for purifying the cooling water. Thus, the filtering line 76, the electromagnetic valve 77, and the DI filter 78 are shared between the first cooling-water circuit 3 and the second cooling-water circuit 4. Therefore, the size of the chiller 1 as a whole is made smaller than in a case where the filtering line 76, the DI filter 78, and the electromagnetic valve 77 are provided to each of the first cooling-water circuit 3 and the second cooling-water circuit 4. Thus, the chiller 1 realizes cost saving and energy saving.

The above embodiment relates to a case where two cooling-water circuits: the first cooling-water circuit 3 and the second cooling-water circuit 4, are provided. Alternatively, three cooling-water circuits may be provided. In the latter case, the refrigeration circuit 2 includes three sets of the following elements, the same number as the number of cooling-water circuits: the first heat-exchange-path section 23 including the first main expansion valve 18 and the first heat exchanger 21, the second heat-exchange-path section 24 including the second main expansion valve 19 and the second heat exchanger 22, the first branch path 25 provided with the first sub expansion valve 27, and the second branch path 26 provided with the second sub expansion valve 28.

If three cooling-water circuits are provided, the filtering line 76 branches off from the second supply line of any one of the three cooling-water circuits and is connected to either of the return lines of the other two cooling-water circuits. Furthermore, the communicating line 80 is connected to lower parts of the three respective tanks in such a manner as to communicate therewith.

To reduce the electrical conductivities (to increase the electrical resistances) of the first cooling water 7 and the second cooling water 8, ethylene glycol may be added to the first cooling water 7 and the second cooling water 8.

### Reference Signs List

1 chiller
2 refrigeration circuit
3 first cooling-water circuit (cooling-water circuit)
4 second cooling-water circuit (cooling-water circuit)
5 first device (heat load)
5a, 6a supply-side device pipe
5b, 6b return-side device pipe
6 second device (heat load)
7 first cooling water (cooling water)
8 second cooling water (cooling water)
9 housing
9a fan-housing part
9b air outlet
9c air inlet
10 control device
11, 13 supply-side device connection port
12, 14 return-side device connection port
16 compressor
16a, 21a, 22a, 41b inlet
16b, 41a, 61a outlet
17 condenser
17a entrance
17b electric motor
17c fan
17d, 21b, 22b exit
18 first main expansion valve
19 second main expansion valve
21 first heat exchanger (heat exchanger)
21c, 22c case
21d, 22d primary-refrigerant-flowing part
21e, 22 ecooling-water-flowing part
22 second heat exchanger (heat exchanger)
23 first heat-exchange-path section (heat-exchange-path section)
24 second heat-exchange-path section (heat-exchange-path section)
25 first branch path
26 second branch path
27 first sub expansion valve
28 second sub expansion valve
31 first temperature sensor
32 filter
33 first pressure sensor
34 second temperature sensor
35 second pressure sensor
36 third temperature sensor
40 first tank (tank)
40a, 60a feed port
40b, 60b lid
41 first pump (pump)
43 first supply line
44 second supply line
45, 65 return line
46 return communicating line
48, 68 level switch
49, 69 drain por
50, 70 drainpipe
51, 71 supply-side temperature sensor
52, 72 supply-side pressure sensor
60 second tank (tank)
61 second pump (pump)
63 first supply line
64 second supply line
73 temperature sensor
76 filtering line
76a merging part
77 electromagnetic valve
78 DI filter
79 conductivity sensor
80 communicating line

## Claims

1. A chiller configured to control temperatures of a plurality of heat loads by using circulating cooling waters, the chiller comprising:
a plurality of cooling-water circuits through which the cooling waters are respectively supplied to the plurality of heat loads; and
a refrigeration circuit through which primary refrigerant that controls the temperatures of the cooling waters flows,
wherein the refrigeration circuit includes heat-exchange-path sections that are connected in parallel with one another and are provided with respective heat exchangers, a number of the heat-exchange-path sections being equal to a number of the cooling-water circuits,
wherein the plurality of cooling-water circuits are each connected to the heat exchanger of a corresponding one of the plurality of heat-exchange-path sections,
wherein the plurality of cooling-water circuits each include a tank in which the cooling water is stored; a first supply line through which the cooling water in the tank is supplied to the heat exchanger of the corresponding one of the plurality of heat-exchange-path sections; a pump provided to the first supply line; a second supply line through which the cooling water having a temperature controlled in the heat exchanger is delivered to the heat load; and a return line through which the cooling water returning from the heat load is guided to the tank,
wherein the chiller further includes a filtering line branching off from the second supply line of any one of the plurality of cooling-water circuits and connected to the return lines of the others of the cooling-water circuits, and
wherein the filtering line is provided with a DI filter for purifying the cooling waters.

2. The chiller according to Claim 1,
wherein a communicating line for maintaining an amount of each of the cooling waters in the tanks to be constant is connected between the tanks of the plurality of cooling-water circuits.

3. The chiller according to Claim 2,
wherein a flow rate of the cooling water flowing from the filtering line into the tank through the return line is equal to a flow rate of the cooling water discharged from the tank and flowing through the communicating line into the tank included in the cooling-water circuit having the second supply line to which the filtering line is connected.

4. The chiller according to Claim 2, further comprising:
a control device configured to control the chiller as a whole,
wherein the filtering line is provided with an electromagnetic valve configured to allow or stop flow of the cooling water from the second supply line into the filtering line,
wherein the return line is provided with a conductivity sensor configured to measure electrical conductivity of the cooling water flowing in the return line, and
wherein the control device controls the electromagnetic valve to open or close with reference to the electrical conductivity measured by the conductivity sensor.

5. The chiller according to Claim 3, further comprising:
a control device configured to control the chiller as a whole,
wherein the filtering line is provided with an electromagnetic valve configured to allow or stop flow of the cooling water from the second supply line into the filtering line,
wherein the return line is provided with a conductivity sensor configured to measure electrical conductivity of the cooling water flowing in the return line, and
wherein the control device controls the electromagnetic valve to open or close with reference to the electrical conductivity measured by the conductivity sensor.
